(19) Europäisches Patentamt
European Patent Office
Office européen des brevets

(11) **EP 3 177 040 A2**

(12) **EUROPEAN PATENT APPLICATION**

(43) Date of publication:
**07.06.2017 Bulletin 2017/23**

(51) Int Cl.:
***H04R 29/00*** (2006.01)          ***G01H 3/12*** (2006.01)
***H04S 7/00*** (2006.01)

(21) Application number: **16201993.9**

(22) Date of filing: **02.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **04.12.2015  JP 2015237756**

(71) Applicant: **Canon Kabushiki Kaisha**
**Tokyo 146-8501 (JP)**

(72) Inventor: **UMESAWA, Takeo**
**Ohta-ku, Tokyo 146-8501 (JP)**

(74) Representative: **Houle, Timothy James**
**Canon Europe Ltd**
**European Patent Department**
**3 The Square**
**Stockley Park**
**Uxbridge, Middlesex UB11 1ET (GB)**

(54) **INFORMATION PROCESSING APPARATUS, INFORMATION PROCESSING METHOD, AND PROGRAM**

(57)     An information processing apparatus includes obtaining means (200) configured to obtain an image captured by imaging means (111), detection means (201) configured to detect target sound corresponding to a detection target from audio data obtained by sound collection means (113), area estimation means (210) configured to estimate a detectable area where the target sound can be detected in an area indicated by the captured image on a basis of at least one of a directionality of the sound collection means (113) and a distance from a position of a target sound source that generates the target sound, and generation means (211) configured to generate an area image indicating the detectable area.

FIG. 6A

FIG. 6B

FIG. 6C

**Description**

BACKGROUND OF THE INVENTION

Field of the Invention

The present invention relates to an information processing apparatus, an information processing method, and a program.

Description of the Related Art

Up to now, technologies for sound detection and speech recognition are applied to various fields and are being used. For example, application as a control interface such as a mobile phone, a personal computer (PC), or a car navigation system has been proposed. Japanese Patent Laid-Open No. 2014-137323 describes an abnormality diagnosis apparatus configured to calculate a distribution from an image of an object and a collected sound pressure signal and superpose a sound pressure map on the image to diagnose an abnormal area.

However, in the technologies such as the speech recognition, a setting such as a sound volume gain of a microphone that collects sound needs to be appropriately carried out, and the user needs to adjust the setting of the microphone. For example, in a case where the user desires to perform the speech recognition in a certain area, the user needs to extract a representative point of the area and generate a test sound at the representative point to perform the setting such as the sound volume gain. Even when the above-described adjustment is performed, an area where the user desires to perform the speech recognition may be deviated from an area where the appropriate speech recognition can be actually performed, and, as a result, an accuracy or the like of the speech recognition expected by the user is not obtained in some cases.

SUMMARY OF THE INVENTION

To support a setting operation for performing sound detection processing by a user, for example, the following configurations are provided.

The present invention in its first aspect provides an exposure apparatus as specified in claims 1 to 14.

The present invention in its second aspect provides an information processing method as specified in claim 15.

The present invention in its third aspect provides a program as specified in claim 16.

Further features of the present invention will become apparent from the following description of exemplary embodiments with reference to the attached drawings.

BRIEF DESCRIPTION OF THE DRAWINGS

Fig. 1 illustrates a hardware configuration of a monitoring system.

Fig. 2 illustrates a software configuration of an information processing apparatus.

Figs. 3A and 3B are explanatory diagrams for describing a coordinate system.

Fig. 4 is an explanatory diagram for describing characteristic information and installation information.

Fig. 5 is a flow chart illustrating setting processing of detecting abnormal sound.

Figs. 6A to 6C illustrate examples of a display screen.

Fig. 7 illustrates the monitoring system according to a modified example.

Fig. 8 illustrates a software configuration of the information processing apparatus according to a second exemplary embodiment.

Fig. 9 is a flow chart illustrating level ratio estimated value gradient estimating processing.

Fig. 10 illustrates a software configuration of the information processing apparatus according to a third exemplary embodiment.

Fig. 11 illustrates an example of an area image.

Figs. 12A to 12C are explanatory diagrams for describing a detectable area further in detail.

Figs. 13A and 13B illustrate other display examples of the detectable area.

DESCRIPTION OF THE EMBODIMENTS

Hereinafter, exemplary embodiments of the present invention will be described with reference to the drawings.

First exemplary embodiment

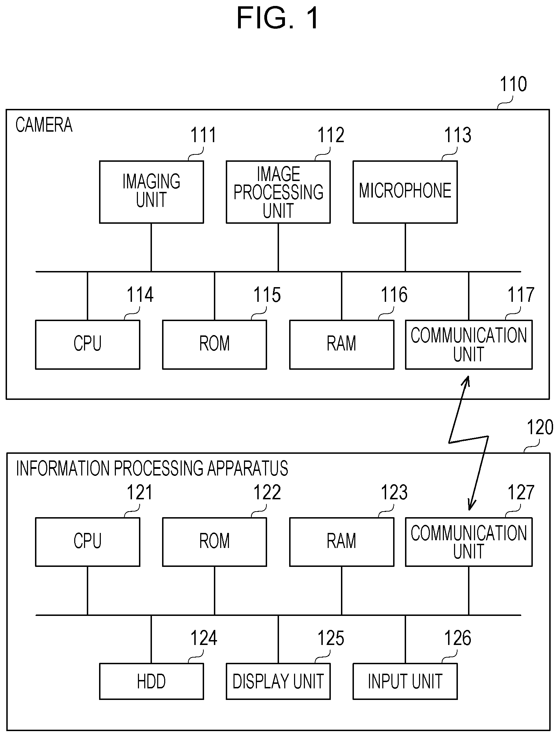

Fig. 1 illustrates a hardware configuration of a monitoring system 100 according to a first exemplary embodiment. The monitoring system 100 is a system configured to perform monitoring so as to detect abnormal sound. In a case where an abnormal sound, such as a scream or a roar, is generated in a monitoring area, the monitoring system 100 detects this sound as the abnormal sound and notifies a user such as a surveillance agent of this event. The monitoring system 100 includes a camera 110 corresponding to an example of an imaging apparatus and an information processing apparatus 120.

The camera 110 captures video of the monitoring area and transmits this video to the information processing apparatus 120. The camera 110 also collects sound and transmits audio data to the information processing apparatus 120. The information processing apparatus 120 displays the received video. In addition, the information processing apparatus 120 determines the presence or absence of the abnormal sound from the audio data. In a case where the abnormal sound has been generated, the information processing apparatus 120 performs processing of notifying the user that the abnormal sound has been generated. The information processing apparatus 120 further estimates an area where the detection of the abnormal sound can be performed and superposes the estimated detectable area on the video to be displayed.

The camera 110 includes an imaging unit 111 (imaging means), an image processing unit 112, a microphone 113, a CPU 114, a ROM 115, a RAM 116, and a communication unit 117. The imaging unit 111 includes an image pickup element constituted by a CCD or a CMOS element configured to convert an optical image into an electric signal, a lens group, a shutter, and the like and captures video of the monitoring area. The image processing unit 112 performs image processing such as pixel interpolation processing or color conversion processing. The microphone 113 includes an amplification circuit and a control unit and collects ambient sound.

The CPU 114 reads out a control program stored in the ROM 115 and executes various processings. The RAM 116 is used as a temporary storage area such as a main memory of the CPU 114 or a work area. It should be noted that a function and processing of the camera 110 which will be described below are realized while the CPU 114 reads out a program stored in the ROM 115 and executes this program. The communication unit 117 performs a communication with an external apparatus such as the information processing apparatus 120 via a network.

The information processing apparatus 120 includes a CPU 121, a ROM 122, a RAM 123, an HDD 124, a display unit 125, an input unit 126, and a communication unit 127. The CPU 121, the ROM 122, the RAM 123, and the communication unit 127 are respectively similar to the CPU 114, the ROM 115, the RAM 116, and the communication unit 117. The HDD 124 stores various information such as image data and various programs. The display unit 125 displays the various information. The input unit 126 includes a keyboard and a mouse and accepts various operations by the user.

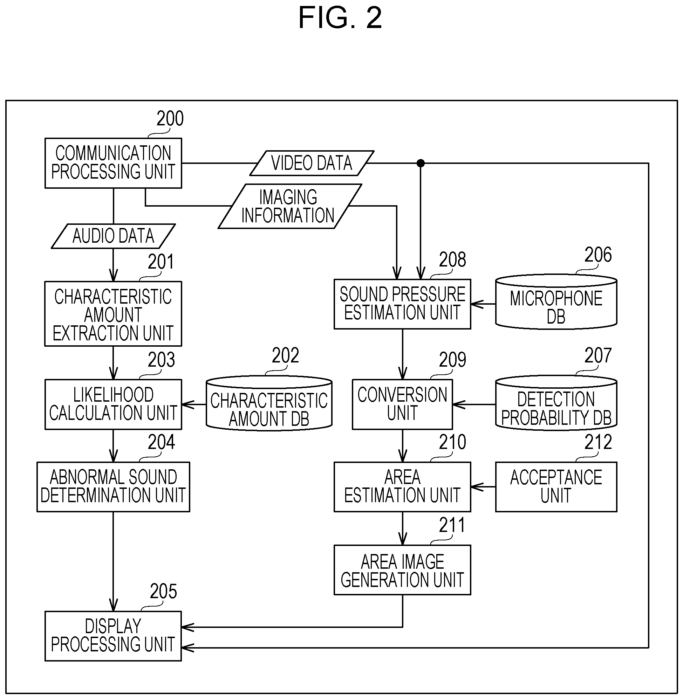

Fig. 2 illustrates a software configuration of the information processing apparatus 120. A communication processing unit 200 controls a communication with the external apparatus. The communication processing unit 200 receives, for example, the audio data, video data, and imaging information from the camera 110. The imaging information includes a panning angle, a tilting angle, and a viewing angle. A characteristic amount extraction unit 201 (detection means) extracts a characteristic amount of the sound on the basis of the audio data input from the camera 110. Herein, a fundamental frequency of the sound, a formant frequency, a spectrum, a mel-frequency cepstrum coefficient (MFCC) obtained from a cepstrum, zero crossing, sub-band energy, and the like are represented as the characteristic amount. Probability distributions of respective characteristic amounts with respect to respective acoustic models are registered in a characteristic amount data base (DB) 202. Herein, the acoustic model is obtained by learning and modelling scream, roar, other background sound such as, for example, ambient sound of a shop, or the like corresponding to the target sound.

A likelihood calculation unit 203 calculates a likelihood of a characteristic amount vector of the input audio data with respect to respective characteristic amount vectors of the respective acoustic models registered in the characteristic amount DB 202. Subsequently, the likelihood calculation unit 203 transmits an N-Best result including a model candidate of the detection result and a score of the likelihood calculation to an abnormal sound determination unit 204. The abnormal sound determination unit 204 selects a top candidate obtained in the likelihood calculation unit 203 as a detection result. In a case where the selected candidate is the sound registered as the abnormal sound and its score exceeds a predetermined threshold, the abnormal sound determination unit 204 determines that the abnormality has occurred and transmits an event indicating that the abnormality has occurred to a display processing unit 205 (display control means). The display processing unit 205 displays various information. When the display processing unit 205 receives the event, for example, the display processing unit 205 (display control means) displays information indicating that the abnormality has occurred on the display unit 125 (display means) for the user.

A microphone data base (DB) 206 stores characteristic information indicating a sensitivity directionality of the microphone 113 (sound collection means) of the camera 110 and installation information related to an installation position of the microphone 113. The characteristic information is information indicating relative sensitivity values of the respective positions in units of one degree in a case where a highest sensitivity with respect to an inclination angle $\theta$ with respect to a vertical axis and an inclination angle $\varphi$ in a horizontal plane in a three-dimensional spherical coordinate system where an origin is set on a center of the microphone 113 is set as 1. In general, a scale factor relationship between a Cartesian coordinate system and a three-dimensional polar coordinate system is represented by Expression (1).

$$(x, y, z)$$

$$= (r\sin\theta\cos\varphi, r\sin\theta\sin\varphi, r\cos\theta) \cdots (1)$$

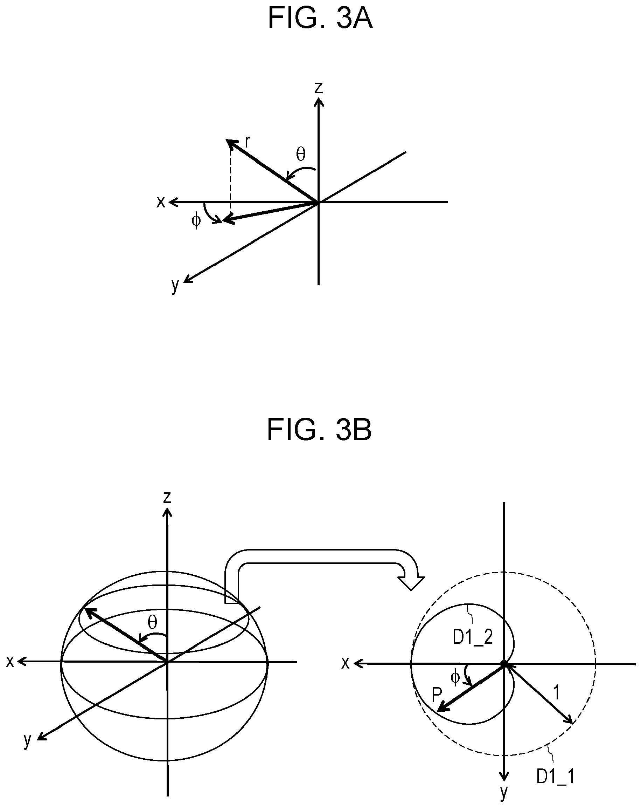

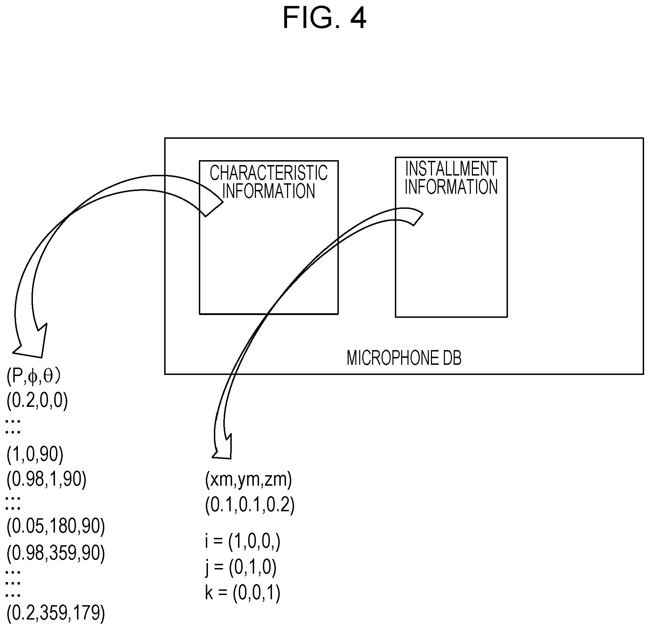

Fig. 3A illustrates a relationship between a three-dimensional Cartesian coordinate system and the three-dimensional polar coordinate system. As illustrated in Fig. 3B, $\theta$ and $\varphi$ of the characteristic information corresponds to the coordinate system in which a plane having an optimal sensitivity characteristic is set as an xy plane, and a direction having the optimal sensitivity characteristic in the plane is set as an x axis. Hereinafter, this coordinate system will be referred to as a microphone relative coordinate system. Herein, a broken line circuit D1_1 in a drawing on the right side in Fig. 3B is a circle in which a relative sensitivity value is 1 that is a maximum value, and a closed curve D1_2 represents a relative microphone sensitivity value on a plane cut by the inclination angle $\theta = \theta_0$. As illustrated in Fig. 4, the relative microphone sensitivity value described with reference to Fig. 3B is registered in the microphone DB 206 as the characteristic information of the microphone.

On the other hand, a Cartesian coordinate system is defined in which a center of the imaging unit 111 is placed on an origin, an optical axis of the camera 110 is set as an x axis, an axis perpendicular to the x axis in a plane parallel to an imaging plane is set as a y axis, and an axis perpendicular to the above-described x axis and y axis is set as a z axis. Hereinafter, this coordinate system will be referred to as a camera absolute coordinate system. The installment information of the microphone 113 includes a position of the origin of the microphone relative coordinate system and unit vectors in directions of the x axis, the y axis, and the z axis in a relative microphone relative coordinate system as viewed from the camera absolute coordinate system. Therefore, transform from the microphone relative coordinate system to the camera absolute coordinate system can be realized while the installment information is used.

According to the present exemplary embodiment, the microphone 113 is built in the camera 110, and the installment information and the characteristic information of the microphone 113 are previously registered in the microphone DB 206. It should be noted however that an external microphone may be used for the detection of the abnormal sound instead of the microphone 113. In this case, the input unit 126 accepts the user input of the installment information and the characteristic information of this external microphone, and the CPU 121 registers the installment information and the characteristic information of the external microphone in the microphone DB 206.

Descriptions will be given with reference to Fig. 2 again. A detection probability data base (DB) 207 (storage means) stores a correspondence table in which the sound pressure is associated with the detection probability. Herein, the sound pressure is a sound pressure of sound generated in a predetermined sound source. According to the present exemplary embodiment, the sound pressure is a sound pressure of the sound from the sound source at a position away from the microphone 113 by 10 m. The detection probability is a rate of the successful detections out of the number of attempts for detecting the sound of the corresponding sound pressure. It should be noted that, as the sound pressure is higher, the detection probability is higher. Thus, the still higher detection probability is associated with the still higher sound pressure.

A sound pressure estimation unit 208 (sound pressure estimation means) obtains video data (captured image) from the camera 110 via the communication processing unit 200. The sound pressure estimation unit 208 further obtains imaging information from the camera 110 via the communication processing unit 200 and also obtains the characteristic information and setting information of the microphone 113 from the microphone DB 206. The sound pressure estimation unit 208 calculates sound pressure estimated values of respective points in the captured image on the basis of these pieces of information. Hereinafter, a set of the sound pressure estimated values of the respective points will be referred to as a sound pressure estimated value gradient. The processing of the sound pressure estimation unit 208 will be described in detail below.

A conversion unit 209 (conversion means) refers to the detection probability DB 207 and converts the sound pressure estimated values of the respective points obtained by the sound pressure estimation unit 208 into the detection probability. An area estimation unit 210 (area estimation means) estimates an area where the detection probability is higher than or equal to the threshold as the detectable area of the abnormal sound. An area image generation unit 211 (generation means) generates an area image indicating the detectable area. It should be noted that the area image is superposed on the video data by the display processing unit 205 and displayed on the display unit 125. An acceptance unit 212 (acceptance means) accepts an instruction input from the user via the input unit 126.

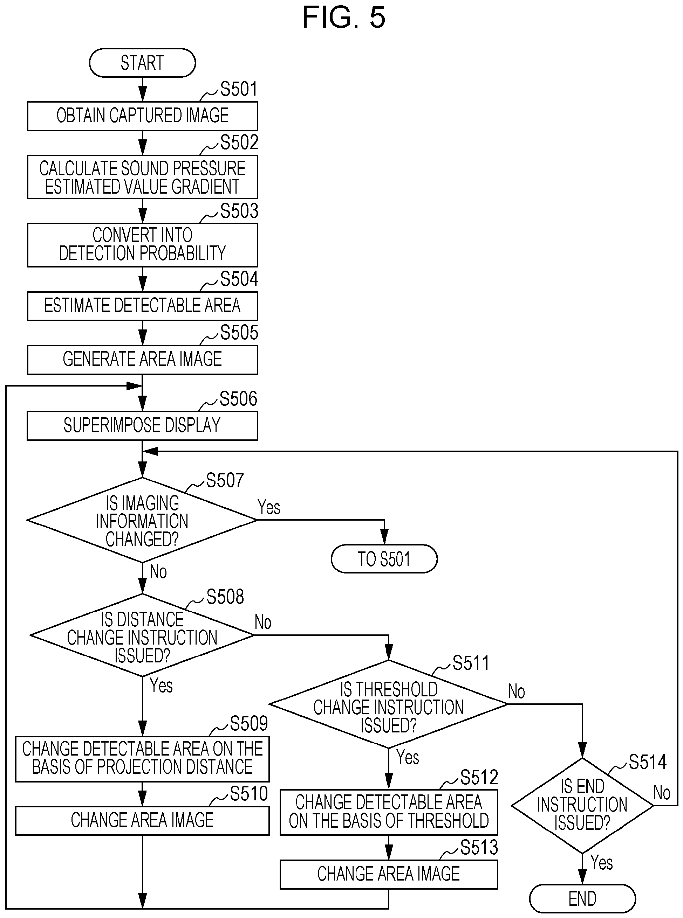

Fig. 5 is a flow chart illustrating setting processing for the abnormal sound detection by the information processing apparatus 120. In S501, the sound pressure estimation unit 208 obtains the captured image via the communication processing unit 200 (obtaining processing, performed by obtaining means 200). Next, in S502, the sound pressure estimation unit 208 calculates a sound pressure estimated value gradient. Herein, the sound pressure estimated value gradient is a set of the sound pressure estimated values of the respective points in the captured image. The sound pressure estimation unit 208 obtains an imaging viewing angle and an orientation of the optical axis in the camera absolute coordinates as the imaging information. Then, the sound pressure estimation unit 208 transforms the imaging viewing angle into coordinate values (x, y) in the camera absolute coordinate system on the basis of the orientation of the optical axis in the camera absolute coordinates, the imaging viewing angle, and the installment information of the microphone 113. Specifically, the sound pressure estimation unit 208 performs the coordinate transform by Expression (2). It should be noted that 1 denotes a focal length.

$$\begin{cases} x = l \tan \varphi \\ y = l \dfrac{\sec \varphi}{\tan \theta} \end{cases} \quad \cdots \quad (2)$$

Furthermore, the sound pressure estimation unit 208 transforms the coordinate values in the camera absolute coordinate system into coordinate values in the microphone relative coordinate system on the basis of the installment information of the microphone 113. Subsequently, the sound pressure estimation unit 208 refers to the characteristic information of the microphone 113 and calculates sound pressure estimated values of respective points in the captured image in a case where the sound at the sound pressure 85 dB [SPL (sound pressure level)] is generated at a position away from the microphone 113 by 10 m in a predetermined direction. Herein, the respective points in the captured image are a plurality of positions away from the microphone 113 by 10 m. The present processing is an example of the sound pressure estimation processing of estimating the sound pressures at the plurality of positions in the area at the predetermined distance from the microphone 113 in the captured image. The sound pressure estimation unit 208 associates the sound pressure estimated values at the coordinates of the respective points with one another to be recorded in the HDD 124 or the like. It should be noted that the position of the microphone 113 and the sound pressure are not limited to the exemplified embodiment.

Next, in S503, the conversion unit 209 refers to the detection probability DB 207 and converts the respective sound pressure estimated values obtained in S502 into the detection probability (conversion processing). Next, in S504, the area estimation unit 210 estimates the detectable area (area estimation processing). Specifically, the area estimation unit 210 estimates an area where the detection probability is higher than or equal to a threshold as the detectable area. According to the present exemplary embodiment, the threshold is set as 90%, but the threshold is not particularly limited.

Next, in S505, the area image generation unit 211 generates the area image indicating the detectable area (generation processing). The area image generation unit 211 generates, for example, an image having the detectable area colored in yellow as the area image. Next, in S506, the display processing unit 205 superposes the area image on the video data and displays this on the display unit 125 (display control processing). The display processing unit 205 generates a superposed image in which the area image is α-blended at a rate of α = 0.3, for example, and displays this image on the display unit 125.

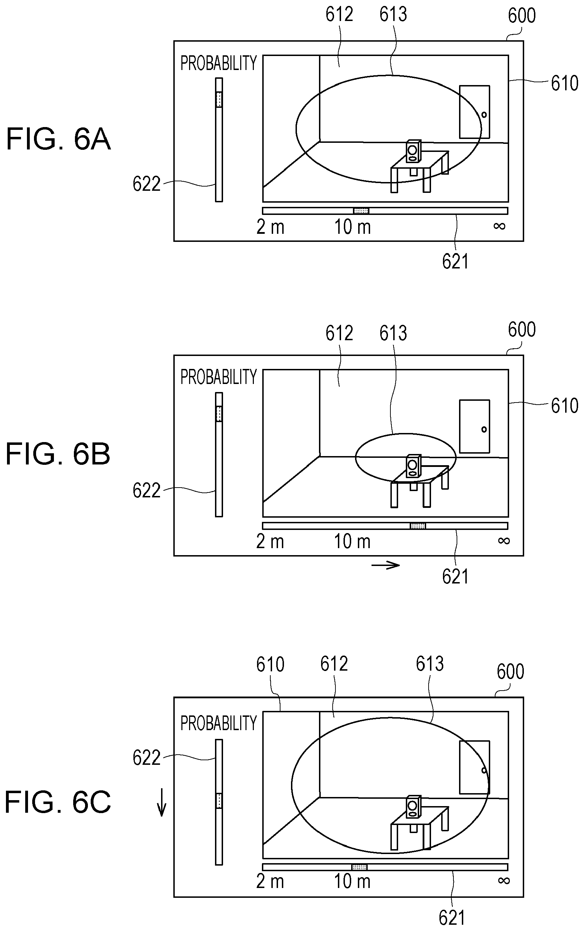

Fig. 6A illustrates an example of a display screen 600 displayed on the display unit 125 in S506. The display screen 600 displays a superposed image 610 and operation bars 621 and 622. A boundary line 613 indicating the detectable area is displayed on the superposed image 610. Video data (captured image) 612 is displayed on an outer side of the boundary line 613. The area image 613 is superposed on the video data 612 on an inner side of the boundary line 613. That is, the area illustrated on the inner side of the boundary line 613 is an area where the abnormal sound can be detected at the probability of 90% when the abnormal sound at 85 dB [SPL (sound pressure level)] is generated at a distance of 10 m away from the microphone 113. The user visually checks the superposed image 610, so that it is possible to check whether or not the area corresponding to the detection target of the abnormal sound is included in the detectable area.

The operation bar 621 is a user interface for inputting the distance from the microphone 113 (projection distance), and the operation bar 622 is a user interface for inputting the threshold of the detection probability used to estimate the detectable area. While buttons of the operation bars 621 and 622 are adjusted, the user can input change instructions of the projection distance and the threshold of the detection probability to the information processing apparatus 120.

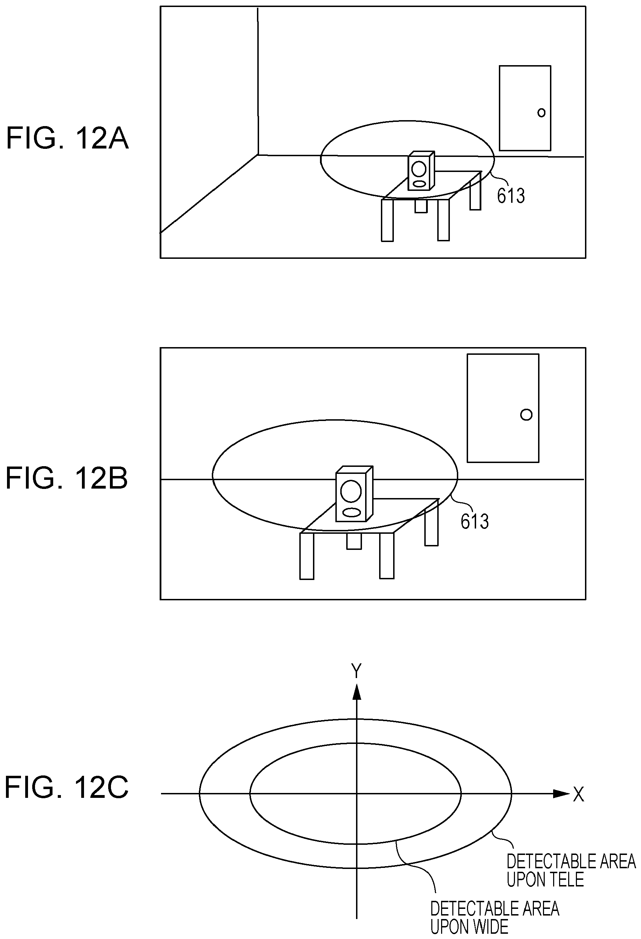

The boundary line 613 indicating the detectable area is changed in accordance with a zoom magnification. Fig. 12A illustrates a state in which the zoom magnification is tele, and Fig. 12B illustrates a state in which the zoom magnification is wide. Herein, the zoom magnification at the time of tele is set as Z1, and the zoom magnification at the time of wide is set as Z2. As illustrated in Fig. 12C, the respective coordinate values (x', y') in the boundary line at the time of tele can be obtained by transforming the respective coordinates (x, y) in the boundary line 613 at the time of wide by two expressions including x' = x × (Z1/Z2) and y' = y × (Z1/Z2).

Descriptions will be given with reference to Fig. 5 again. After the processing in S506, the CPU 121 advances the processing to S507. In S507, the sound pressure estimation unit 208 checks whether or not the imaging information is changed. In a case where the imaging information is changed (S507: Yes), the sound pressure estimation unit 208 advances the processing to S501. In a case where the imaging information is not changed (S507: No), the sound pressure estimation unit 208 advances the processing to S508. In S508, the acceptance unit 212 checks whether or not the change instruction of the projection distance is accepted (acceptance processing). In a case where the change instruction of the projection distance is accepted (S508: Yes), the acceptance unit 212 advances the processing to S509. In a case where the change instruction of the projection distance is not accepted (S508: No), the acceptance unit 212 advances the processing to S511.

In S509, the area estimation unit 210 changes the detectable area on the basis of the projection distance related to the change instruction. According to the present exemplary embodiment, the acceptance unit 212 transforms the coordinates (x, y) of the boundary line of the detectable area into the coordinates (x', y') by Expression (3). That is, the coordinates (x', y') are coordinates after the transform. In addition, z denotes the distance after the change.

$$\begin{cases} x' = \dfrac{10\,x}{z} \\[2em] y' = \dfrac{10\,y}{z} \end{cases} \quad \cdots \quad (3)$$

Next, in S510, the area image generation unit 211 generates the area image indicating the detectable area after the change. The present processing is similar to the processing in S505. The CPU 121 thereafter advances the processing to S506.

In S511, the acceptance unit 212 checks whether or not the change instruction of the threshold of the detection probability is accepted (acceptance processing). In a case where the change instruction of the threshold is accepted (S511: Yes), the acceptance unit 212 advances the processing to S512. In a case where the change instruction of the threshold is not accepted (S511: No), the acceptance unit 212 advances the processing to S514. In S512, the area image generation unit 211 changes the detectable area on the basis of the threshold related to the change instruction. Next, in S513, the area estimation unit 210 generates the area image indicating the detectable area after the change. The present processing is similar to the processing in S505. The CPU 121 thereafter advances the processing to S506. In S514, the acceptance unit 212 checks whether or not the end instruction in accordance with the user input is accepted. In a case where the end instruction is accepted (S514: Yes), the acceptance unit 212 ends the processing. In a case where the end instruction is not accepted (S514: No), the acceptance unit 212 advances the processing to S507.

Fig. 6B illustrates the superposed image 610 in a case where the projection distance is changed to a distance longer than 10 m. In the example of Fig. 6B, the detectable area becomes smaller. Fig. 6C illustrates the superposed image 610 in a case where the threshold of the detection probability is changed to a lower value. In the example of Fig. 6C, the detectable area 613 becomes larger. In this manner, the information processing apparatus 120 according to the present exemplary embodiment can display the detectable area in accordance with the threshold of the detection probability and the projection distance.

According to the present exemplary embodiment, since the monitoring system 100 displays the detectable area as described above, it is possible to simplify the setting operation by the user and reduce the setting mistakes. Furthermore, since the user can carry out the abnormal sound detection after the appropriate setting has been performed, a detection accuracy of the abnormal sound detection can be improved.

As a first modified example of the first exemplary embodiment, the target sound corresponding to the detection target by the information processing apparatus 120 is not limited to the abnormal sound. The target sound may be sound having a predetermined frequency. In addition, the target sound may be such a voice that a particular word or phrase is audibly recognized. That is, in this case, it is sufficient when the information processing apparatus 120 detects the particular word or phrase through the speech recognition.

As a second modified example, the area estimation unit 210 may set a plurality of detection probabilities as thresholds such as, for example, the detection probability of 90%, the detection probability of 80%, and the detection probability of 60% and estimate a plurality of detectable areas corresponding to the respective thresholds. In addition, the area image generation unit 211 may generate a plurality of area images indicating the detectable areas.

As a third modified example, the area image indicating the detectable area is not limited to the exemplary embodiment. For example, the area image may be an image three-dimensionally indicating the detectable area.

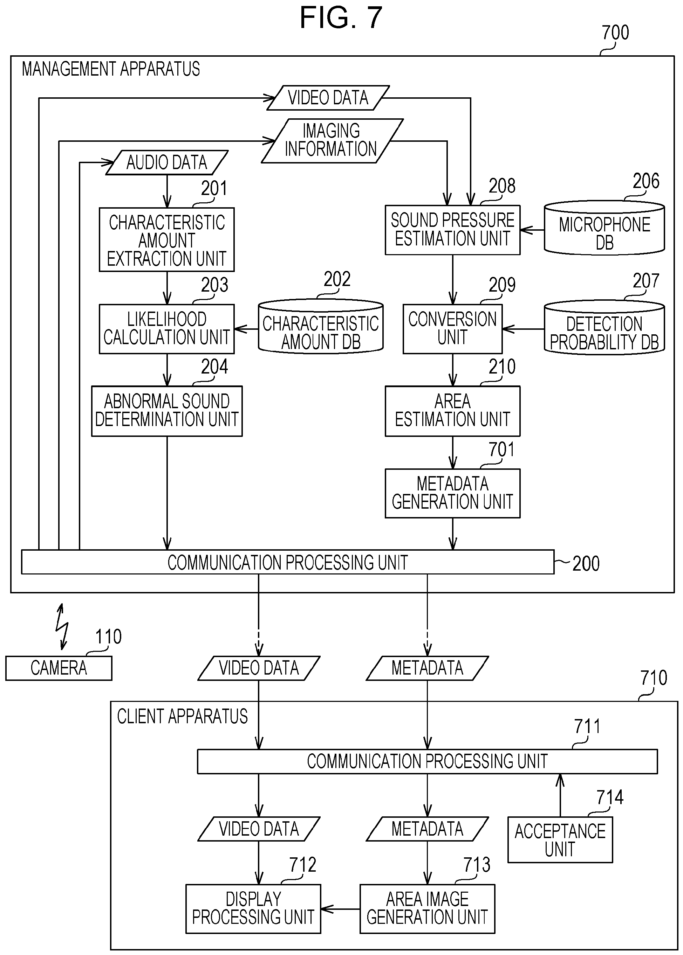

As a fourth modified example, the processing of the information processing apparatus 120 may be executed by a plurality of apparatuses. For example, the processing of the information processing apparatus 120 may be executed by a management apparatus 700 and a client apparatus 710 illustrated in Fig. 7. It should be noted that hardware configurations of the management apparatus 700 and the client apparatus 710 illustrated in Fig. 7 are similar to the hardware configuration of the information processing apparatus 120 described with reference to Fig. 1. It should be noted however that the management apparatus 700 may omit the display unit 125.

The management apparatus 700 includes the communication processing unit 200, the characteristic amount extraction unit 201, the characteristic amount DB 202, the likelihood calculation unit 203, the abnormal sound determination unit 204, the microphone DB 206, the detection probability DB 207, the sound pressure estimation unit 208, the conversion unit 209, and the area estimation unit 210. Functions of the respective units are similar to the functions of the respective units described according to the first exemplary embodiment. The management apparatus 700 further includes a metadata generation unit 701. According to the present exemplary embodiment, the event generated by the abnormal sound determination unit 204 is transmitted to the communication processing unit 200. Subsequently, the communication processing unit 200 (transmission means 200) transmits the event to the client apparatus 710.

The metadata generation unit 701 generates metadata indicating the detectable area estimated by the area estimation unit 210. Specifically, the metadata generation unit 701 generates a coordinate group where the detection probability is higher than or equal to the threshold as the metadata. Subsequently, the communication processing unit 200 transmits the metadata to the client apparatus 710.

The client apparatus 710 includes a communication processing unit 711, a display processing unit 712, an area image generation unit 713, and an acceptance unit 714. The communication processing unit 711 controls a communication with the external apparatus. The communication processing unit 711 receives the video data, the above-described metadata, the event, or the like from the management apparatus 700, for example. The area image generation unit 713 generates the area image on the basis of the metadata. The area image generated herein is the same image as the area image generated by the area image generation unit 211 according to the first exemplary embodiment.

The display processing unit 712 controls so as to superpose the area image generated by the area image generation unit 713 on the video data (captured image) received from the management apparatus 700 via the communication processing unit 711 to be displayed. In a case where the communication processing unit 711 receives the event, the display processing unit 712 controls so as to display information indicating that the abnormal sound has been generated on the basis of the event.

Similarly as in the acceptance unit 212 according to the first exemplary embodiment, the acceptance unit 714 (acceptance means) accepts the change instructions of the change instruction of the projection distance and the detection probability. These instructions are transmitted via the communication processing unit 711 to the management apparatus 700. Subsequently, the area estimation unit 210 changes the detectable area in accordance with the change instructions. Then, the metadata generation unit 701 generates metadata indicating the detectable area after the change. The generated metadata is transmitted to the client apparatus 710. The area image generation unit 713 generates the area image indicating the detectable area related to the change instructions, and the display processing unit 712 displays the superposed image including the area image after the change.

Second exemplary embodiment

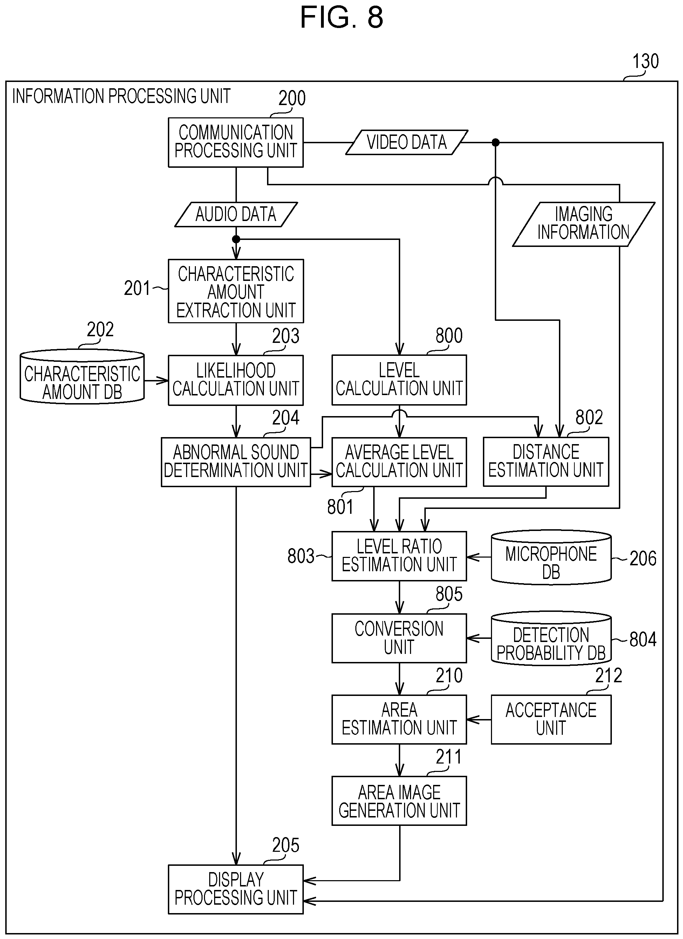

Next, a monitoring system according to a second exemplary embodiment will be described. In the monitoring system according to the second exemplary embodiment, an information processing apparatus generates an area image on the basis of the audio data collected by the microphone 113. Hereinafter, a different aspect of the monitoring system according to the second exemplary embodiment from the monitoring system 100 according to the first exemplary embodiment will be described. Fig. 8 illustrates a software configuration of an information processing apparatus 130 according to the second exemplary embodiment. The information processing apparatus 130 includes the communication processing unit 200, the characteristic amount extraction unit 201, the characteristic amount DB 202, the likelihood calculation unit 203, the abnormal sound determination unit 204, and the microphone DB 206. The information processing apparatus 130 also includes the area estimation unit 210, the area image generation unit 211, and the acceptance unit 212. Functions of the respective units are similar to the functions of the respective units described according to the first exemplary embodiment.

The information processing apparatus 130 further includes a level calculation unit 800, an average level calculation unit 801, a distance estimation unit 802, a level ratio estimation unit 803, a detection probability data base (DB) 804 (storage means), and a conversion unit 805 (conversion means). According to the present exemplary embodiment, when it is determined that the abnormal sound has been generated, the abnormal sound determination unit 204 transmits the event to not only the display processing unit 205 but also the average level calculation unit 801 and the distance estimation unit 802. The level calculation unit 800 receives the input of the audio data and calculates a square sum of amplitude data of the audio data as the sound pressure level.

The average level calculation unit 801 applies a filter to the sound pressure levels calculated by the level calculation unit 800 (identification means) to obtain an average level. Then, the average level calculation unit 801 stores the average level. Specifically, in a case where the event notification is received from the abnormal sound determination unit 204, the average level calculation unit 801 performs application of a target sound averaging filter (primary IIR). On the other hand, in a case where the event notification is not received from the abnormal sound determination unit 204, the average level calculation unit 801 performs application of a background sound averaging filter (primary IIR). Herein, for example, a coefficient of the target sound averaging filter is set as 0.96, and a coefficient of the background sound averaging filter is set as 0.96.

The distance estimation unit 802 obtains the video data (captured image) and compares the video data with a sound source image previously stored in the HDD 124 or the like to identify an installment position of the sound source, for example. To identify the sound source, the distance estimation unit 802 uses template matching. The distance estimation unit 802 further controls the camera 110. The distance estimation unit 802 controls the camera 110 so as to capture an image in which a focus is on the identified position and estimates a distance between the identified position and the camera 110 from the imaging condition at this time.

The level ratio estimation unit 803 (level ratio estimation means) obtains the video data (captured image) from the camera 110 via the communication processing unit 200. The sound pressure estimation unit 208 further obtains the imaging information from the camera 110 via the communication processing unit 200 and also obtains the characteristic information and the setting information of the microphone 113 from the microphone DB 206. The sound pressure estimation unit 208 calculates an estimated value of a ratio of average levels of the background sound and the target sound at the respective points in the captured image (level ratio estimated value) on the basis of these pieces of information. Hereinafter, a set of the level ratio estimated values at the respective points will be referred to as a level ratio estimated value gradient. The processing of the sound pressure estimation unit 208 will be described in detail below. The detection probability DB 804 stores a correspondence table in which the level ratio of the sound pressure is associated with the detection probability. The conversion unit 805 refers to the detection probability DB 804 and converts the level ratio estimated values at the respective points obtained by the level ratio estimation unit 803 into the detection probabilities.

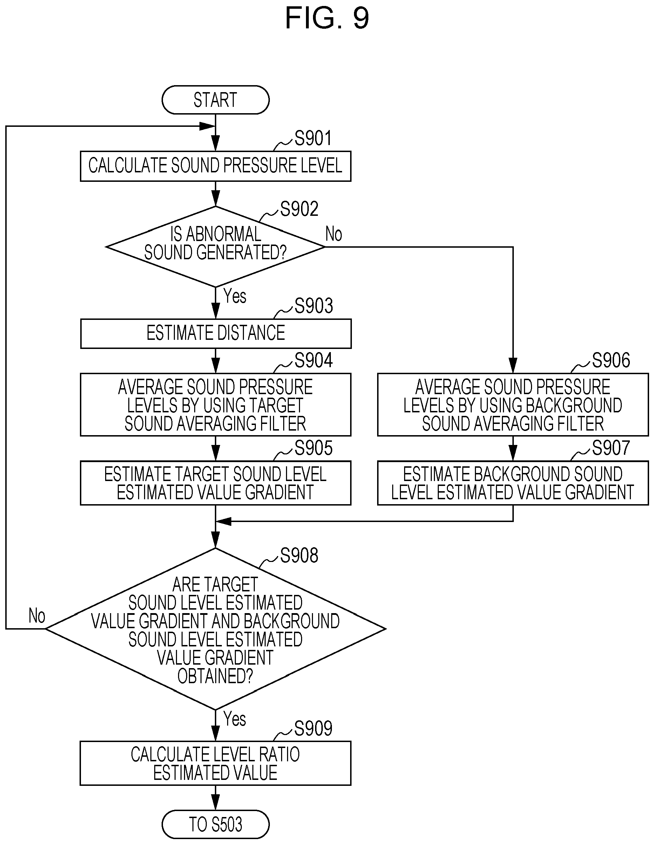

The information processing apparatus 130 according to the present exemplary embodiment performs level ratio estimated value gradient estimating processing instead of the sound pressure estimated value gradient estimating processing (S502) described according to the first exemplary embodiment. Fig. 9 is a flow chart illustrating the level ratio estimated value gradient estimating processing. In S901, the level calculation unit 800 calculates a square sum of amplitude data of the audio data as the sound pressure level. The present processing is an example of identification processing of identifying the sound pressure level. Next, in S902, the average level calculation unit 801 checks whether or not the abnormal sound is generated. In a case where the abnormal sound is generated (S902: Yes), the average level calculation unit 801 advances the processing to S903. In a case where the abnormal sound is not generated (S902: No), the average level calculation unit 801 advances the processing to S906. In S903, the distance estimation unit 802 identifies a target sound source and estimates a distance between the identified sound source and the camera 110. Next, in S904, the average level calculation unit 801 averages the sound pressure levels of the audio data determined as the abnormal sound (target sound) by using the target sound averaging filter.

Next, in S905, the level ratio estimation unit 803 calculates a sound pressure level estimated value of the target sound at the respective points in the captured image by using the average sound pressure level of the target sound calculated in S904 and the characteristic information of the microphone 113. Hereinafter, the sound pressure level estimated value of the target sound will be referred to as a target sound level estimated value. In addition, a set of the target sound level estimated values at the respective points will be referred to as a target sound level estimated value gradient. The level ratio estimation unit 803 records the target sound level estimated value gradient in a storage unit such as the RAM 123. Specifically, the level ratio estimation unit 803 transforms the coordinates of the respective points of the captured image into coordinates of the camera absolute coordinate system to be further transformed into coordinates of the microphone relative coordinate system on the basis of the installment information of the microphone 113, and estimates the sound pressure level gradient in the image. Subsequently, the target sound level estimated values at the respective points in the captured image are calculated from the average sound pressure level of the target sound on the basis of the sound pressure level gradient. At this time, the level ratio estimation unit 803 calculates a distance with the sound source area of all the areas in the screen when a Z-constant plane is cut off on a three-dimensional space while the sound source coordinates are set as (x, y) = (0, 0) and the sound source distance is set as Z.

Furthermore, the level ratio estimation unit 803 estimates the sound pressure level in a case where the target sound is generated at the position at the distance from the sound source area on the basis of Expression (4), for example.

$$L = \frac{Z^2}{x^2 + y^2 + Z^2} L_0 \qquad \cdots (4)$$

Where L denotes the target sound level estimated value, $L_0$ denotes the average sound pressure level of the target sound, Z denotes the distance to the sound source, and (x, y) denotes the coordinates in the screen in a case where the sound source coordinates are set as the origin (0, 0). Furthermore, the level ratio estimation unit 803 multiplies $Z^2/100$, for example, on the target sound level estimated value to be converted into the sound pressure level at the distance of 10 m. The level ratio estimation unit 803 calculates a target sound estimated value by multiplying the sound pressure level gradient in the image on the above-described estimated sound pressure level.

On the other hand, in S906, the average level calculation unit 801 averages the sound pressure levels of the audio data determined as the background sound by using the background sound averaging filter. Next, in S907, the level ratio estimation unit 803 calculates a sound pressure level estimated value of the background sound at the respective points in the captured image by using the average sound pressure level of the background sound calculated in S1006 and the characteristic information of the microphone 113. Hereinafter, the sound pressure level estimated value of the background sound will be referred to as a background sound level estimated value. Herein, the level ratio estimation unit 803 calculates the background sound level estimated value while the averaged sound pressure level is received in an area where the sensitivity is the highest in the captured image. It should be noted that the level ratio estimation unit 803 supposes that the background sound is constant without depending on the distance and calculates the background sound level estimated value through the multiplication of the sound pressure level gradient using the characteristic information of the microphone 113 without performing the distance dependent calculation. Hereinafter, a set of the background sound level estimated value at the respective points will be referred to as a background sound level estimated value gradient. The average level calculation unit 801 records the background sound level estimated value gradient in a storage unit such as the RAM 123, for example.

Next, in S908, the level ratio estimation unit 803 checks whether or not the target sound level estimated value gradient and the background sound level estimated value gradient are obtained. In a case where the target sound level estimated value gradient and the background sound level estimated value gradient are obtained (S908: Yes), the level ratio estimation unit 803 advances the processing to S909. In a case where at least one level estimated value gradient of the target sound level estimated value gradient and the background sound level estimated value gradient is not obtained (S908: No), the level ratio estimation unit 803 advances the processing to S901. That is, in S908, the level ratio estimation unit 803 stands by until the target sound level estimated value gradient and the background sound level estimated value gradient are obtained. It should be noted that, in a case where S901 to S907 are repeated, it is sufficient if the information processing apparatus 130 performs only the estimation of the level estimated value gradient that has not been obtained at the time of the processing. In addition, as another example, the information processing apparatus 130 may perform the estimation of the level estimated value gradient again to be overwritten by the newly obtained level estimated value gradient.

In S909, the level ratio estimation unit 803 calculates a ratio of the target sound level estimated value to the background sound level estimated value at each of the points. Hereinafter, the ratio of the target sound level estimated value to the background sound level estimated value will be referred to as a level ratio estimated value. In addition, a set of the level ratio estimated values at the respective points will be referred to as a level ratio estimated value gradient. After the processing in S909, the CPU 121 advances the processing to S503. It should be noted that, according to the present exemplary embodiment, in S503, the conversion unit 805 refers to the detection probability DB 804 and converts the level ratio estimated values at the respective points into the detection probabilities (conversion processing). As a result, the level ratio estimated value gradient calculation processing is ended. It should be noted that the other configuration and processing of the information processing apparatus 130 according to the second exemplary embodiment are similar to the configuration and processing of the monitoring system 100 according to the first exemplary embodiment.

As described above, in the monitoring system 100 according to the second exemplary embodiment too, the user visually checks the superposed image 610, so that it is possible to check whether or not the area corresponding to the detection target of the abnormal sound is included in the detectable area. As a result, it is possible to simplify the setting operation by the user and reduce the setting mistakes. Furthermore, since the user carries out the abnormal sound detection after the appropriate setting is performed, the detection accuracy of the abnormal sound detection can be improved.

A modified example of the second exemplary embodiment will be described. The information processing apparatus 130 may estimate the detection probability on the basis of the sound pressure of the abnormal sound similarly as described according to the first exemplary embodiment instead of estimating the abnormal sound on the basis of the level ratio estimated value.

Third exemplary embodiment

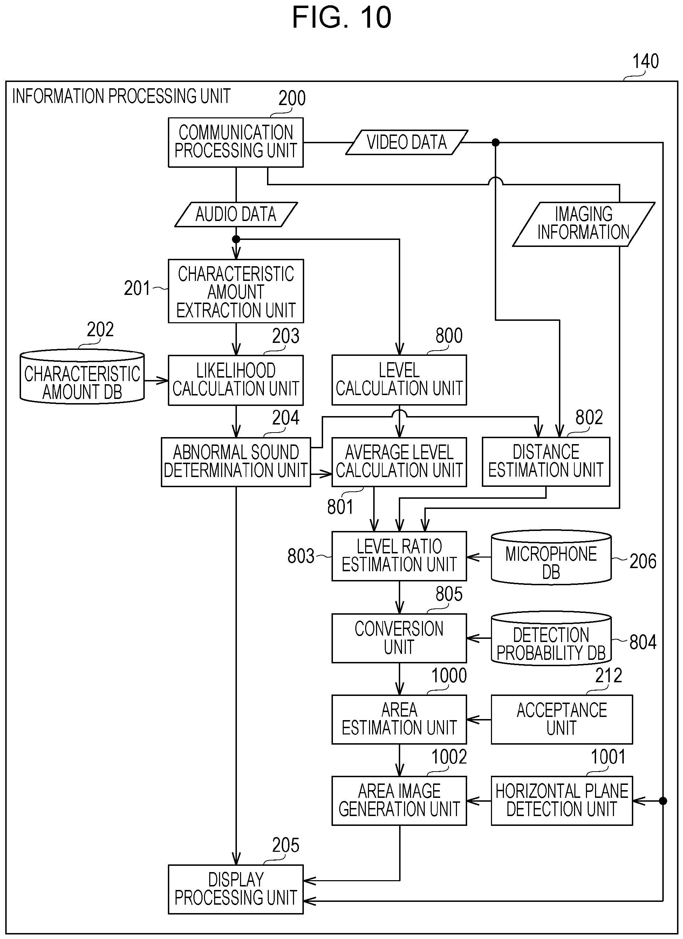

Next, a monitoring system according to a third exemplary embodiment will be described. In the monitoring system according to the third exemplary embodiment, an information processing apparatus generates an area image in which the detectable area is projected on a floor surface. Hereinafter, a different aspect of the monitoring system according to the third exemplary embodiment from the monitoring system 100 according to the second exemplary embodiment will be described. Fig. 10 illustrates a software configuration of an information processing apparatus 140 according to the third exemplary embodiment. An area estimation unit 1000 estimates a plurality of detectable areas on the basis of a plurality of thresholds of the detection probability. According to the present exemplary embodiment, the area estimation unit 1000 estimates four detectable areas. Specifically, the area estimation unit 1000 uses a detection probability with respect to reference sound generated in the target sound source to estimate the detectable area. Hereinafter, the detection probability with respect to the reference sound will be referred to as a reference detection probability. The area estimation unit 1000 also estimates the detectable area by respectively using the detection probabilities that are lower than the reference detection probability by 10% and 20% and the detection probability that is higher than the reference detection probability by 10%.

The information processing apparatus 140 further includes a horizontal plane detection unit 1001 (extraction means). The horizontal plane detection unit 1001 detects the floor surface on the basis of color information or edge information of the captured image and extracts a floor surface area from the captured image (extraction processing). It should be noted that a related-art technology may be used for the floor surface detection processing, and the processing method is not limited to the exemplary embodiment.

The microphone DB 206 stores the height information of the microphone 113 as the installment information of the microphone 113. In addition, as another example, the height of the microphone 113 may be input by the user. An area image generation unit 1002 identifies horizontal distances from the microphone 113 to the boundaries of the respective detectable areas on the basis of the distance information from the microphone 113 to the sound source and the height information of the microphone 113 indicated by the installment information of the microphone 113.

The area image generation unit 1002 (projection means) also identifies a vertical projection position (point P) of the position of the sound source onto the floor surface on the basis of the position information of the sound source. Furthermore, the area image generation unit 1002 identifies an equidistance line with which a horizontal distance from the microphone 113 is equal to a horizontal distance from the microphone 113 to the point P on the floor surface as a boundary line of the area where the detectable area is projected onto the floor surface area and sets this equidistance line as an equidistance line L0. Furthermore, the area image generation unit 1002 identifies a horizontal distance at which the detection probability is decreased by 10%, a horizontal distance at which the detection probability is decreased by 20%, and a horizontal distance at which the detection probability is increased by 10% and sets the respective horizontal distances as equidistance lines L1, L2, and L3. The present processing is an example of projection processing of projecting the detectable area onto the floor surface area.

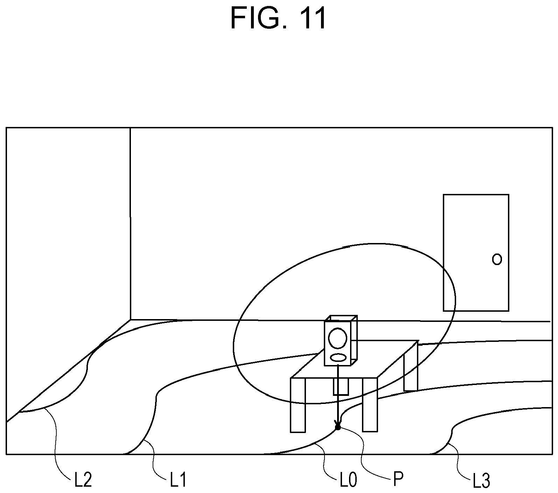

Furthermore, the area image generation unit 1002 colors a floor surface area closer to the microphone 113 than the equidistance line L3, for example, in a color of R = 16, G = 16, and B = 16. The area image generation unit 1002 also colors a floor surface area sandwiched between the equidistance line L0 and the equidistance line L3, for example, in a color of R = 32, G = 32, and B = 32. The area image generation unit 1002 also colors a floor surface area sandwiched between the equidistance line L1 and the equidistance line L0, for example, in a color of R = 64, G = 64, and B = 64. The area image generation unit 1002 also colors a floor surface area sandwiched between the equidistance line L2 and the equidistance line L1, for example, in a color of R = 128, G = 128, and B = 128. The area image generation unit 1002 also colors an area far from the equidistance line L2 in a color of R = 255, G = 255, and B = 255. Through the above-described processing, the area image generation unit 1002 generates a floor surface colored image (area image). Fig. 11 illustrates an example of the area image.

The display processing unit 205 superposes the floor surface colored image on the video data. The display processing unit 205 generates a superposed image α-blended at a rate of α = 0.3, for example, and displays this image on the display unit 125. It should be noted that the configuration and processing other than this of the information processing apparatus 140 according to the third exemplary embodiment is similar to the configuration and processing of the information processing apparatus 130 according to the second exemplary embodiment.

As described above, the information processing apparatus 140 according to the present exemplary embodiment can project the area in accordance with the detection probability onto the floor surface to be displayed. Therefore, the user can more easily understand the relationship between the detection probability and the distance. As a result, it is possible to simplify the setting operation by the user and reduce the setting mistakes. Furthermore, since the user carries out the abnormal sound detection after the appropriate setting is performed, the detection accuracy of the abnormal sound detection can be improved.

Thus far, the exemplary embodiments of the present invention have been described in detail, but the present invention is not limited to the above-described particular exemplary embodiments, and various modifications and alterations can be made within the gist of the present invention described in the section of claims.

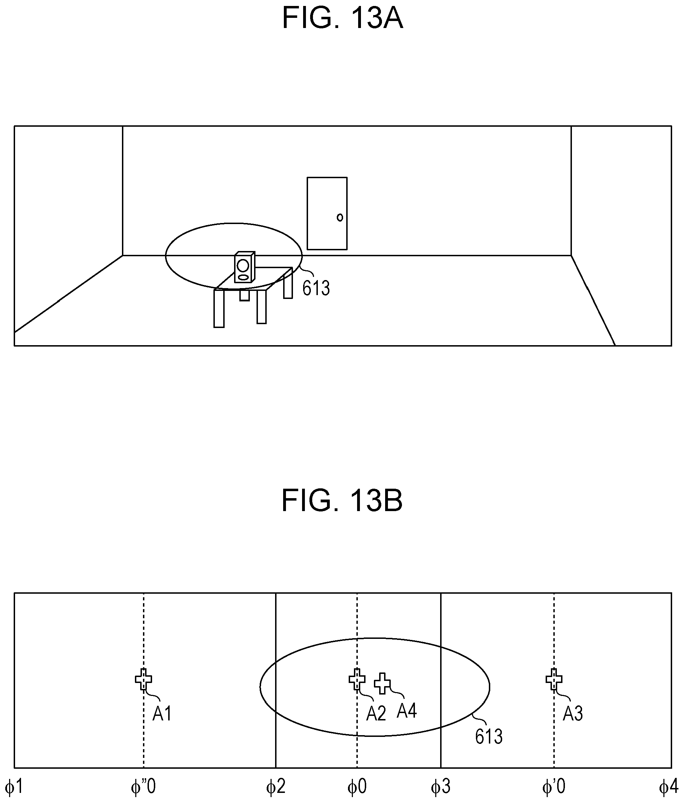

For example, as illustrated in Fig. 13A, a line indicating the detectable area 613 or the like may be superposed on a panoramic image indicating an entire range where imaging can be performed by moving the imaging unit 111 in a panning direction or a tilting direction. The panoramic image is created by synthesizing a plurality of images to one another which are captured while the imaging unit 111 is sequentially moved in the panning direction and the tilting direction. This example is effective in a case where the microphone 113 can collect sound generated in a range of a size larger than or equal to a viewing angle of the imaging unit 111.

For example, as illustrated in Fig. 13B, a consideration will be given of a panoramic image obtained by synthesizing three images with one another at angles φ2 and φ3 which respectively have angles φ0, φ'0, and φ"0 in a horizontal direction of an imaging direction of the imaging unit 111 where a predetermined position is set as a reference. At this time, when a direction in which the microphone 113 has the highest sensitivity is set as A4, an image before the panoramic synthesizing where A4 is included in the imaging range (in this case, an image in a range from φ2 to φ3 where A2 is set as the center) is selected, and the detectable area 613 is determined within the image where A4 is set as the center. Next, protruding part may be superposed on part of the other image.

Other exemplary embodiments

The present invention can also be realized by processing in which a program for realizing one or more functions of the above-described exemplary embodiments is supplied to a system or an apparatus via a network or a storage medium, and one or more processors in a computer of the system or the apparatus reads out and executes the program. In addition, the present invention can be realized by a circuit that realizes one or more functions (for example, ASIC).

According to the respective exemplary embodiments described above, it is possible to support the setting operation for performing the sound detection processing by the user.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. An information processing apparatus comprising:

   obtaining means (200) configured to obtain an image captured by imaging means (111);
   detection means (201) configured to detect target sound corresponding to a detection target from audio data obtained by sound collection means (113);
   area estimation means (210) configured to estimate a detectable area where the target sound can be detected in an area indicated by the captured image on a basis of at least one of a directionality of the sound collection means (113) and a distance from a position of a target sound source that generates the target sound; and
   generation means (211) configured to generate an area image indicating the detectable area.

2. The information processing apparatus according to claim 1, further comprising:

   display control means (205) configured to display the captured image on which the area image is superposed on display means (125).

3. The information processing apparatus according to claim 1 or claim 2, further comprising:

   transmission means (200) configured to transmit the captured image on which the area image is superposed to an external apparatus.

4. The information processing apparatus according to any preceding claim, further comprising:

sound pressure estimation means (208) configured to estimate sound pressures at a plurality of positions in an area of the captured image on a basis of the directionality,
wherein the area estimation means (210) estimates the detectable area on a basis of sound pressure estimated values estimated by the sound pressure estimation means (208).

5. The information processing apparatus according to claim 4, further comprising:

storage means (207) configured to store a correspondence table in which the sound pressure and a sound detection probability with respect to the sound pressure are stored while being associated with each other; and conversion means (209) configured to refer to the correspondence table and convert the sound pressure estimated value into the detection probability,
wherein the area estimation means (210) estimates the detectable area on a basis of the detection probability.

6. The information processing apparatus according to claim 5, wherein the area estimation means (210) estimates an area where the detection probability is higher than or equal to a threshold as the detectable area.

7. The information processing apparatus according to claim 6, further comprising:

acceptance means (212) configured to accept a change instruction of the threshold,
wherein the area estimation means (210) changes the detectable area on a basis of the threshold related to the change instruction.

8. The information processing apparatus according to any preceding claim, wherein the area estimation means (210) estimates the detectable area in an area at a predetermined distance from the sound collection means (113) indicated by the captured image.

9. The information processing apparatus according to claim 8, further comprising:

acceptance means (714) configured to accept a change instruction of a distance from the sound collection means (113),
wherein the area estimation means (210) changes the detectable area on a basis of the distance related to the change instruction.

10. The information processing apparatus according to any one of claims 1 to 3, wherein the area estimation means (210) estimates the detectable area where the target sound can be detected in the area indicated by the captured image on a basis of the distance from the position of the target sound source where the target sound is generated.

11. The information processing apparatus according to claim 10, further comprising:

identification means (800) configured to identify a sound pressure level of the target sound and a sound pressure level of background sound,
wherein the area estimation means (210) estimates the detectable area on a basis of the sound pressure level of the target sound, the sound pressure level of the background sound, and the distance from the position of the target sound source.

12. The information processing apparatus according to claim 11, further comprising:

level ratio estimation means (803) configured to estimate a level ratio of the sound pressure level of the target sound and the sound pressure level of the background sound on a basis of the sound pressure level of the target sound, the sound pressure level of the background sound, and the distance from the position of the target sound source,
wherein the area estimation means (210) estimates the detectable area on a basis of a level ratio estimated value estimated by the level ratio estimation means (803).

**13.** The information processing apparatus according to claim 12, further comprising:

storage means (804) configured to store a correspondence table in which the level ratio and the detection probability of the sound with respect to the level ratio are stored while being associated with each other; and
conversion means (805) configured to refer to the correspondence table and convert the level ratio estimated value into the detection probability,
wherein the area estimation means (210) estimates the detectable area on a basis of the detection probability.

**14.** The information processing apparatus according to any one of claims 10 to 13, further comprising:

extraction means (1001) configured to extract a floor surface area from the captured image; and
projection means (1002) configured to project the detectable area onto the floor surface area,
wherein the generation means (211) generates the area image indicating the detectable area projected onto the floor surface area.

**15.** An information processing method executed by an information processing apparatus, the information processing method comprising:

obtaining an image captured by imaging means (111);
detecting target sound corresponding to a detection target from audio data obtained by sound collection means (113) ;
estimating a detectable area where the target sound can be detected in an area indicated by the captured image on a basis of at least one of a directionality of the sound collection means (113) and a distance from a position of a target sound source that generates the target sound; and
generating an area image indicating the detectable area.

**16.** A program for causing a computer to function as:

obtaining means (200) configured to obtain an image captured by imaging means (111);
detection means (201) configured to detect target sound corresponding to a detection target from audio data obtained by sound collection means (113);
area estimation means (210) configured to estimate a detectable area where the target sound can be detected in an area indicated by the captured image on a basis of at least one of a directionality of the sound collection means (113) and a distance from a position of a target sound source that generates the target sound; and
generation means (211) configured to generate an area image indicating the detectable area.

# FIG. 1

110

**CAMERA**

| 111 | 112 | 113 |
|---|---|---|
| IMAGING UNIT | IMAGE PROCESSING UNIT | MICROPHONE |

| 114 | 115 | 116 | 117 |
|---|---|---|---|
| CPU | ROM | RAM | COMMUNICATION UNIT |

120

**INFORMATION PROCESSING APPARATUS**

| 121 | 122 | 123 | 127 |
|---|---|---|---|
| CPU | ROM | RAM | COMMUNICATION UNIT |

| 124 | 125 | 126 |
|---|---|---|
| HDD | DISPLAY UNIT | INPUT UNIT |

# FIG. 2

# FIG. 3A

# FIG. 3B

# FIG. 4

CHARACTERISTIC
INFORMATION

INSTALLMENT
INFORMATION

MICROPHONE DB

(P,ϕ,θ)
(0.2,0,0)
⋮⋮
(1,0,90)
(0.98,1,90)
⋮⋮
(0.05,180,90)
(0.98,359,90)
⋮⋮
⋮⋮
(0.2,359,179)

(xm,ym,zm)
(0.1,0.1,0.2)

i = (1,0,0,)
j = (0,1,0)
k = (0,0,1)

# FIG. 5

```
                    ( START )
                       |
                       | ~S501
          +------------------------------+
          |    OBTAIN CAPTURED IMAGE      |
          +------------------------------+
                       |
                       | ~S502
          +------------------------------+
          |  CALCULATE SOUND PRESSURE    |
          |  ESTIMATED VALUE GRADIENT    |
          +------------------------------+
                       |
                       | ~S503
          +------------------------------+
          |      CONVERT INTO            |
          |  DETECTION PROBABILITY       |
          +------------------------------+
                       |
                       | ~S504
          +------------------------------+
          |  ESTIMATE DETECTABLE AREA    |
          +------------------------------+
                       |
                       | ~S505
          +------------------------------+
          |    GENERATE AREA IMAGE       |
          +------------------------------+
                       |
                       | ~S506
          +------------------------------+
          |    SUPERIMPOSE DISPLAY       |
          +------------------------------+
                       |
                       | ~S507
                  < IS IMAGING >        Yes
                  < INFORMATION >  ----------->  ( TO S501 )
                  < CHANGED? >
                       | No
                       | ~S508
              < IS DISTANCE >           No
              < CHANGE INSTRUCTION >  --------+
              < ISSUED? >                     |
                       | Yes                  | ~S511
                       |                 < IS THRESHOLD >         No
                       | ~S509          < CHANGE INSTRUCTION > -------+
          +------------------------+    < ISSUED? >                  |
          | CHANGE DETECTABLE AREA ON THE |      | Yes               | ~S514
          | BASIS OF PROJECTION DISTANCE  |      |             < IS END >        No
          +------------------------+      | ~S512 < INSTRUCTION > ---+
                       | ~S510     +----------------------+  < ISSUED? >
          +------------------------+| CHANGE DETECTABLE AREA |      | Yes
          |   CHANGE AREA IMAGE    || ON THE BASIS OF THRESHOLD|
          +------------------------++----------------------+   ( END )
                       |                  | ~S513
                       |           +----------------------+
                       |           |  CHANGE AREA IMAGE    |
                       |           +----------------------+
```

FIG. 6A

FIG. 6B

FIG. 6C

# FIG. 7

700

**MANAGEMENT APPARATUS**

VIDEO DATA

IMAGING INFORMATION

AUDIO DATA

201

CHARACTERISTIC AMOUNT EXTRACTION UNIT

208

SOUND PRESSURE ESTIMATION UNIT

206

MICROPHONE DB

203

LIKELIHOOD CALCULATION UNIT

202

CHARACTERISTIC AMOUNT DB

209

CONVERSION UNIT

207

DETECTION PROBABILITY DB

204

ABNORMAL SOUND DETERMINATION UNIT

210

AREA ESTIMATION UNIT

701

METADATA GENERATION UNIT

COMMUNICATION PROCESSING UNIT ~200

110

CAMERA

VIDEO DATA

METADATA

710

**CLIENT APPARATUS**

711

COMMUNICATION PROCESSING UNIT

714

ACCEPTANCE UNIT

VIDEO DATA

METADATA

712

DISPLAY PROCESSING UNIT

713

AREA IMAGE GENERATION UNIT

21

# FIG. 8

INFORMATION PROCESSING UNIT    ~130

200
COMMUNICATION PROCESSING UNIT

VIDEO DATA

AUDIO DATA

IMAGING INFORMATION

201~ CHARACTERISTIC AMOUNT EXTRACTION UNIT

202
CHARACTERISTIC AMOUNT DB

203
LIKELIHOOD CALCULATION UNIT

800
LEVEL CALCULATION UNIT

204
ABNORMAL SOUND DETERMINATION UNIT

801
AVERAGE LEVEL CALCULATION UNIT

802
DISTANCE ESTIMATION UNIT

803
LEVEL RATIO ESTIMATION UNIT

206
MICROPHONE DB

805
CONVERSION UNIT

804
DETECTION PROBABILITY DB

210
AREA ESTIMATION UNIT

212
ACCEPTANCE UNIT

211
AREA IMAGE GENERATION UNIT

205
DISPLAY PROCESSING UNIT

# FIG. 9

```
                    ┌──────────┐
                    │  START   │
                    └────┬─────┘
                         │              ⌒S901
              ┌──────────▼──────────────────┐
              │ CALCULATE SOUND PRESSURE LEVEL│
              └──────────┬──────────────────┘
                         │              ⌒S902
                    ╱────▼────╲
                  ╱  IS ABNORMAL  ╲   No
                 ◀  SOUND GENERATED? ╲──────────────┐
                  ╲              ╱                   │
                    ╲────┬────╱                      │
                         │ Yes    ⌒S903              │
              ┌──────────▼──────────┐                │
              │   ESTIMATE DISTANCE │                │
              └──────────┬──────────┘                │
                         │    ⌒S904                  │  ⌒S906
              ┌──────────▼──────────┐   ┌────────────▼──────────────┐
              │ AVERAGE SOUND PRESSURE│   │ AVERAGE SOUND PRESSURE   │
              │ LEVELS BY USING TARGET│   │ LEVELS BY USING BACKGROUND│
              │ SOUND AVERAGING FILTER│   │ SOUND AVERAGING FILTER   │
              └──────────┬──────────┘   └────────────┬──────────────┘
                         │    ⌒S905                  │  ⌒S907
              ┌──────────▼──────────┐   ┌────────────▼──────────────┐
              │ ESTIMATE TARGET SOUND│   │ ESTIMATE BACKGROUND SOUND│
              │ LEVEL ESTIMATED VALUE │   │ LEVEL ESTIMATED VALUE    │
              │      GRADIENT        │   │       GRADIENT           │
              └──────────┬──────────┘   └────────────┬──────────────┘
                         │◀──────────────────────────┘
                         │
```

S901 CALCULATE SOUND PRESSURE LEVEL

S902 IS ABNORMAL SOUND GENERATED? — No / Yes

S903 ESTIMATE DISTANCE

S904 AVERAGE SOUND PRESSURE LEVELS BY USING TARGET SOUND AVERAGING FILTER

S905 ESTIMATE TARGET SOUND LEVEL ESTIMATED VALUE GRADIENT

S906 AVERAGE SOUND PRESSURE LEVELS BY USING BACKGROUND SOUND AVERAGING FILTER

S907 ESTIMATE BACKGROUND SOUND LEVEL ESTIMATED VALUE GRADIENT

S908 ARE TARGET SOUND LEVEL ESTIMATED VALUE GRADIENT AND BACKGROUND SOUND LEVEL ESTIMATED VALUE GRADIENT OBTAINED? — No / Yes

S909 CALCULATE LEVEL RATIO ESTIMATED VALUE

TO S503

# FIG. 10

140

**INFORMATION PROCESSING UNIT**

200
COMMUNICATION PROCESSING UNIT

/ VIDEO DATA /

/ AUDIO DATA /

/ IMAGING INFORMATION /

201 — CHARACTERISTIC AMOUNT EXTRACTION UNIT

202
CHARACTERISTIC AMOUNT DB

203
LIKELIHOOD CALCULATION UNIT

800
LEVEL CALCULATION UNIT

204
ABNORMAL SOUND DETERMINATION UNIT

AVERAGE LEVEL CALCULATION UNIT

801

802
DISTANCE ESTIMATION UNIT

803
LEVEL RATIO ESTIMATION UNIT

MICROPHONE DB — 206

805
CONVERSION UNIT

DETECTION PROBABILITY DB — 804

1000
AREA ESTIMATION UNIT

212
ACCEPTANCE UNIT

1002
AREA IMAGE GENERATION UNIT

1001
HORIZONTAL PLANE DETECTION UNIT

205
DISPLAY PROCESSING UNIT

24

# FIG. 11

FIG. 12A

FIG. 12B

FIG. 12C

DETECTABLE AREA
UPON TELE

DETECTABLE AREA
UPON WIDE

613

613

Y

X

# FIG. 13A

# FIG. 13B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014137323 A